# EUROPEAN PATENT SPECIFICATION

(11) **EP 3 263 429 B1**
(45) Date of publication and mention of the grant of the patent: **12.06.2019**
(21) Application number: 17178783.1
(22) Date of filing: 29.06.2017
(51) Int. Cl.: B62D 53/08

(54) **COUPLING UNIT AND BLOCKING ASSEMBLY OF A VEHICLE COUPLING ASSEMBLY**
KUPPLUNGSEINHEIT UND SPERRANORDNUNG EINER FAHRZEUGKUPPLUNGSANORDNUNG
UNITÉ DE COUPLAGE ET ENSEMBLE DE BLOCAGE D'UN ENSEMBLE DE COUPLAGE DE VÉHICULE

(30) Priority: 29.06.2016 NL 2017068
(43) Date of publication of application: 03.01.2018
(73) Proprietor: Logi-d B.V., 3405 CM Benschop (NL)
(72) Inventor: Strien, Cornelis Gerardus, 3405 CM Benschop (NL)
(74) Representative: V.O.

(56) References cited:
- DE-A1- 3 207 582
- FR-A1- 2 418 138
- GB-A- 1 290 683
- US-A- 5 407 221

## Description

The invention relates to a coupling unit and blocking assembly of a vehicle coupling assembly for coupling a towing unit of a compound vehicle to a trailing unit of said compound vehicle.

Such a coupling unit is commonly known, for example from US 5,407,221, disclosing a converter dolly for connecting tandem trailers or compound vehicles. The towing unit may be an integral truck cab assembly or may be connected to a powered tractor unit using for example a fifth wheel and kingpin arrangement commonly known in the art. The trailing unit may be conventionally attached to the towing unit using a converter dolly carrying for example another fifth wheel assembly. These arrangements can provide pivot points between the tractor unit and the first towing unit, between the first towing unit and the converter dolly, and between the trailing unit and the converter dolly.

One of the problems with such a prior art coupling unit is that, due to maximal length regulations, the presence of such a coupling unit in a compound vehicle comprising at least a towing unit and a trailing unit limits the freight volume, as the coupling unit requires quite a lot of space to be left free between the towing unit and the trailing unit. An additional problem is that rearward driving of a compound vehicle is relatively difficult.

Publication FR2418138 discloses a known coupling unit of a trailing unit, wherein the towing unit is provided with a U-shaped bracket, which free legs are pivotally mounted to the towing unit, and which can be turned down and blocked on a drawbar of the coupling unit to inhibit pivotal movement of the coupling unit around a substantially vertical axis. However, the coupling unit is rather cumbersome and coupling of a trailing unit to a towing unit requires additional manipulations.

It is an object of the present invention to solve or at least alleviate the above-mentioned problem. In particular, it is an aim of the invention to provide a coupling unit for coupling a towing unit of a compound vehicle to a trailing unit of said vehicle, which minimizes the space to be left between said towing and said trailing unit, or in other words, it is an aim of the invention to provide a coupling unit which allows to maximize freight space in said towing and said trailing unit while keeping the vehicle's total dimensions within a country's regulated dimensions. It is also an object of the invention to provide a coupling unit which is compatible with actual standards in coupling a towing unit of a compound vehicle and a trailing unit of said vehicle. A further object of the invention is to provide a coupling unit which enables relatively safe and easy driving of the vehicle.

To these aims, according to a first aspect of the present invention, there is provided a coupling unit for cooperation with a blocking assembly mountable on a towing unit of a compound vehicle, the coupling unit comprising
- a first coupling element arranged to couple said coupling unit to said towing unit providing a first pivotal axis between said coupling unit and said towing unit,
- a second coupling element arranged to couple said coupling unit to a trailing unit of said compound vehicle providing a second pivotal axis between said coupling unit and said trailing unit,
- at least one pair of wheels,
wherein said coupling unit comprises rotation limiting means arranged to engage said blocking assembly to block rotation around said first pivotal axis of said coupling unit with respect to said towing unit.

In this way, a first pivot point or pivotal axis close to the towing unit of the compound vehicle is eliminated, as it becomes a semi-rigid coupling, such that the spacing between the towing unit and the trailing unit can be reduced, resulting in more freight volume for a same maximal vehicle's length. As the coupling unit comprises rotation limiting means, which are separate from the first coupling element, said first coupling element may comprise a standard coupling element known to the person skilled in the art, so that the coupling unit is compatible with a known coupling member of traditional towing vehicles. As an additional advantage, the aero-dynamical behaviour of the compound vehicle is improved due to a relatively small distance between said towing and said trailing unit of the compound vehicle, as well as the vehicle's manoeuvrability, thus enabling relatively safe and easy driving of the vehicle.

In a preferred embodiment, the coupling unit may comprise a drawbar centrally and horizontally protruding from said coupling unit, the drawbar thus being transverse to an axis connecting said at least one pair of wheels of the coupling unit. Such a protruding drawbar allows an optimal choice of a coupling point between said towing unit and said coupling unit. On top of that, a single drawbar provides a coupling unit with a relatively light weight. When said drawbar protrudes from said coupling unit, said coupling unit is more easily compatible with standard towing units of vehicles. Alternatively, said bar may protrude from a rear end of said towing unit. The axis can be embodied as a single physical axle connecting the pair of wheels. Alternatively, the pair of wheels can have independently movable and/or actuatable wheels that are on the same virtual axis, wherein the axis connects, albeit virtually, the wheels.

In a more preferred embodiment, said first coupling element can be mounted on an extremity of said protruding drawbar, allowing optimal use of a length of said protruding drawbar. At the same time, a central position of the drawbar, and thus of the first coupling element, make the coupling unit easily compatible with standard coupling systems of a towing vehicle.

It is still more preferred when a length of said protruding drawbar may be adjustable. In this way, a same coupling unit may be adapted to, and used in, different configurations of compound vehicles needing a different spacing between said towing and said trailing unit of the vehicle.

Said rotation limiting means may also preferably be mounted on an extremity of said protruding drawbar. This allows for relatively small rotation limiting means as they are mounted closely to the pivot point of which said rotation limiting means have to block the rotation.

Advantageously, said rotation limiting means may be retractable, for example mechanically retractable or hydraulically retractable, or even manually retractable. In this way, a coupling unit according to the invention can easily be transformed into a conventional dolly, leading to a versatile coupling unit, which can be adapted to different needs and regulations, as the applicable maximum length changes according to the way the coupling unit is used. For example, when rotation around said first pivotal axis of said coupling unit with respect to said towing unit is blocked, the compound vehicle may be considered as an articulated vehicle with a maximum length of 16,50 m, or as a LHV with a maximum length of 25,25 m. When for example said rotation means are retracted, the compound vehicle may be considered as a truck and trailer combination with a maximum length of 18,75 m.

In a preferred embodiment of the coupling unit, said rotation limiting means may comprise at least two blocking elements, of which each is mounted on either side of said first coupling element. As the first coupling element of the coupling unit may also constitute a pivot point when coupled to said towing unit, the mounting of at least one blocking element on either side of said first coupling element prevents a pivoting or yawing movement of the coupling unit with respect to the towing unit in an easy-to-build way. The at least two blocking elements may preferably be mounted on either side of said first coupling element in a direction in parallel with an axis connecting said at least one pair of wheels of said coupling unit, but it is also possible to mount them on either side of said first coupling element in any other direction.

Advantageously, said rotation limiting means may have a substantially elongated shape comprising a longitudinal axis substantially in parallel with an axis connecting said at least one pair of wheels of said coupling unit, allowing in this way a pitching movement of said coupling unit with respect to said towing unit to better absorb shocks. Said rotation limiting means may preferably comprise an at least partly substantially cylindrically shaped and substantially convex element, which may block a yawing or pivotal movement of said coupling unit with respect to said towing unit while still allowing a pitching movement and/or a vertically translational movement of said coupling unit in order to better absorb shocks. Alternatively, said rotation limiting means may for example comprise a substantially concave recess arranged to receive and engage a cooperating substantially convex element on said blocking assembly. On top of blocking a yawing movement, said substantially concave recess may also block a vertically translational movement of said coupling unit with respect to said towing unit, such that the only possible movement of the coupling unit with respect to said towing unit is a pitching movement.

In an advantageous embodiment, said first coupling element comprises a ring hitch element arranged to receive a pintle hook element mountable on said towing unit of said vehicle. Said ring hitch element may for example include a standard drawbar eye arranged to be coupled to a standard coupling head providing the advantage of an easy-to-use and safety tested coupling element. Alternatively, any other coupling element known to the person skilled in the art, may be used as a first coupling element of the coupling unit.

It is preferred that said second coupling element may comprise a fifth wheel plate arranged to receive a kingpin mounted on said trailing unit, providing a secure and easy-to-use coupling between said coupling unit and said trailing unit allowing a pivotal movement of said trailing unit around said kingpin. Such a fifth wheel coupling allows a trailing unit to extend over the pivot point while still providing support to the weight of the trailing unit. Alternatively, any other coupling element known to the person skilled in the art, may be used as a second coupling element of the coupling unit.

In an advantageous embodiment, an axle of at least one wheel of said at least one pair of wheels of said coupling unit may be a steerable axle, which allows to reduce a turning radius of compound vehicle in spite of the vehicle's length. It is preferable that a pivoting angle of said at least one wheel connected to said at least one steerable axle of said coupling unit is higher than 20°, preferably higher than 30°. Alternatively, said pair of wheels may also be following wheels.

In a still more advantageous embodiment, a steering mechanism for steering said at least one steerable axle can comprise at least one angle sensing device to measure an angle between said towing unit and said trailing unit, and/or between said coupling unit and said trailing unit. Said angle sensing device may improve and facilitate precise steering movements. The at least one angle sensing device may send steering instructions to the steerable axle, and/or check whether said steerable axle has reached a correct steering position. Alternatively, instead of, or in combination with, measuring an angle between said towing unit and said trailing unit, and/or between said coupling unit and said trailing unit, said steering mechanism may also be based on the sensing of lateral forces exerted on the wheels of the towing unit, the coupling unit and/or the trailing unit. More advantageously, said steering mechanism may be configured to automatically retract the rotation limiting means of the coupling unit, for example when failure of steering of the steerable axle is detected, for example by a dedicated sensing device. The rotation limiting means can then for example be retracted during driving of the compound vehicle, in order to improve steering of the axle. In this way, a compound vehicle can be provided, which can be adjusted during driving between a first state including a first and a second pivotal axis between the towing unit and the trailing unit, and a second state including only the second pivotal axis between the towing unit and the trailing unit. Alternatively, a first coupling element of the coupling unit may be extendible upon detection of a failure of the steering of the steerable axis. The first coupling element may be extendible with respect to the drawbar, for example can be extended out of the drawbar or may be arranged telescopically. By extending of the first coupling element, or by retraction of the rotation limiting means, blocking of the pivoting movement around a pivoting axis is being undone, and the pivoting movement around the first pivoting axis is possible again, thus allowing the towing unit - trailer combination to act as a normal towing combination having a pivoting coupling between the towing unit and the trailer. Preferably, the extension of the first coupling element, or the retraction of the rotation limiting means, can be done automatically upon detection of a failure of the steerable axis or wheels to limit damage to the vehicle and improve safety.

According to a second aspect of the invention, there is provided a blocking assembly for cooperation with a coupling unit, the coupling unit comprising a first coupling element arranged to couple said coupling unit to a towing unit of a compound vehicle, a second coupling element arranged to couple said coupling unit to a trailing unit of said compound vehicle, at least one pair of wheels, and the coupling unit further comprising rotation limiting means to block rotation around a vertical axis of said coupling unit with respect to said towing unit, wherein said blocking assembly comprises at least one rotation limiting engaging member arranged to engage said rotation limiting means of said coupling unit to block rotation around a vertical axis of said coupling unit with respect to said towing unit. By blocking rotation around said vertical axis, which would otherwise have been a pivot point between said towing unit and said coupling unit, the coupling between the towing and the coupling unit becomes a semi-rigid coupling, such that the spacing between the towing unit and the trailing unit can be reduced, resulting in more freight volume for a same maximal vehicle's length. Said rotation limiting engaging member may be a known part of said towing vehicle, such as a bumper, or may be a dedicated part to be mounted on said towing unit.

In a preferred embodiment, said blocking assembly may comprise at least two spaced apart rotation limiting engaging members. In this way, the forces exerted on these rotation limiting engaging members are more equivalently spread over these at least two members. These at least two members may preferably be spaced apart in a direction in parallel with an axis connecting at least one pair of wheels of said coupling unit, but a spacing apart in any other direction may be possible as well. Also a single rotation limiting engaging member may possibly suffice.

In an advantageous embodiment, said at least one rotation limiting engaging member may have a substantially elongated shape comprising a longitudinal axis substantially in parallel with an axis connecting said at least one pair of wheels of said coupling unit, allowing in this way a pitching movement of said blocking assembly mountable on a towing unit with respect to said coupling unit to better absorb shocks. Said rotation limiting engaging member may preferably comprise an at least partly substantially cylindrically shaped and substantially convex element, which may block a yawing or pivotal movement of said blocking assembly on said towing unit with respect to said coupling unit while still allowing a pitching movement and/or a vertically translational movement in order to better absorb shocks. Alternatively, and preferably, said rotation limiting engaging member may comprise a substantially concave recess arranged to receive and guide a cooperating substantially convex element of said rotation limiting means on said coupling unit. On top of blocking a yawing movement, said substantially concave recess may also block a vertically translational movement of said blocking assembly on said towing unit with respect to said coupling unit, such that the only possible movement of the towing unit with respect to said coupling unit is a pitching movement, improving stability, and thus safety, of the compound vehicle.

In an advantageous embodiment of the invention, said at least one rotation limiting engaging member is mounted on a chassis, which is mountable to said towing unit of said compound vehicle, allowing easy adaptation of any towing unit of a compound vehicle in order to become compatible with said coupling unit according to the first aspect of the invention.

It is preferred that said blocking assembly may comprise a coupling member arranged to cooperate with said first coupling element of said coupling unit to couple said coupling unit to said towing unit. By separating the coupling member from the rotation limiting engaging member, both members can be simplified in their construction. Moreover, a known coupling member may be used, which has the advantage of already having been tested to meet high safety standards for coupling systems in compound vehicles. Said coupling member may advantageously be mounted to said chassis, to provide a single unit which can easily be mounted on a conventional towing unit of a compound vehicle.

It is still more preferable that said at least one rotation limiting engaging member is mounted in alignment with said coupling member in a direction in parallel with an axis connecting at least one pair of wheels of said coupling unit. In this way, the forces exerted on the at least one rotation limiting engaging member, especially at the height of said coupling member, are more equivalently spread.

According to still another aspect of the invention, there is provided a vehicle coupling assembly for coupling a towing unit of a compound vehicle to a trailing unit of said compound vehicle, comprising a coupling unit, and a blocking assembly, as defined by the features of claim 14. The assembly can provide one or more of the above-mentioned advantages. A further aspect of the invention can provide a compound vehicle comprising a towing unit and a trailing unit as defined by the features of claim 15, and leading to one or more of the above-mentioned advantages.

The invention will be further elucidated with reference to figures of exemplary embodiments. Corresponding elements are designated with corresponding reference signs. Therein,
Figures 1a-1d show schematic side views on some examples of compound vehicles;
Figure 2 shows a schematic top view on a compound vehicle including the vehicle coupling assembly of Figure 7;
Figure 3 shows a perspective view of a preferred embodiment of a coupling unit according to a first aspect of the invention;
Figure 4 shows a perspective view of a preferred embodiment of a blocking assembly according to a second aspect of the invention;
Figure 5a shows a perspective view of the blocking assembly of Figure 4 mounted on a towing unit;
Figure 5b shows another embodiment of a blocking assembly mounted on a towing unit;
Figures 6a, 6b and 6c show a preferred embodiment of a vehicle coupling assembly according to a third aspect of the invention;
Figure 7 shows a perspective view of a vehicle coupling assembly comprising the coupling unit of Figure 3 and the blocking assembly mounted on a towing unit as in Figure 5a.

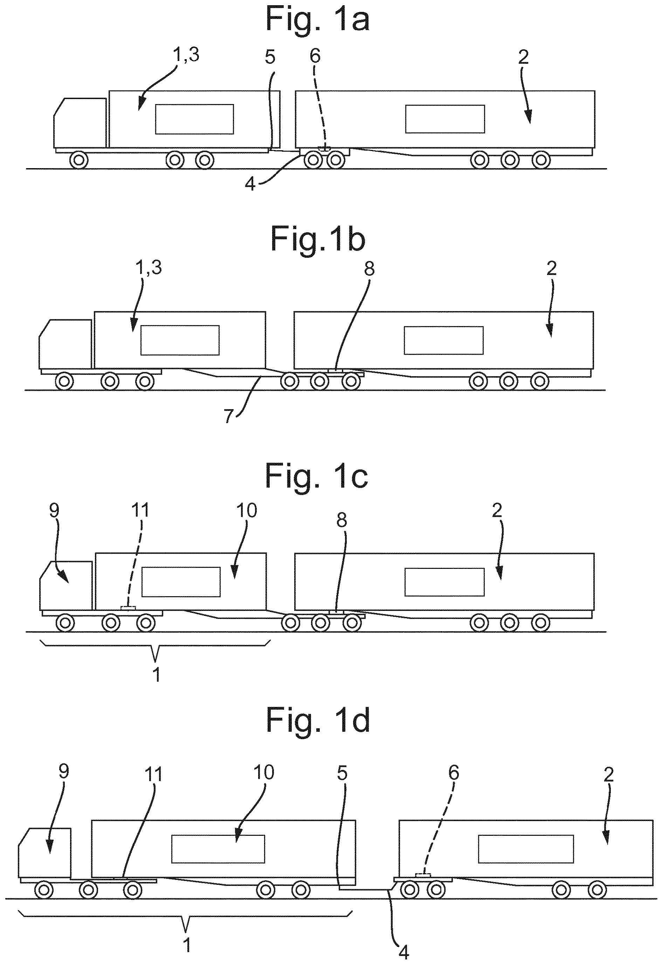

Figures 1a-1d show schematic side views on some examples of compound vehicles. The compound vehicles may for example be a tandem trailer or a Long and Heavy Vehicle (LHV). A compound vehicle may comprise a towing unit 1 and a trailer or trailing unit 2. The towing unit 1 may comprise a truck 3 as in Figures 1a and 1b. The truck 3 may for example comprise a 20-feet container or for example a curtain sided element. The trailing unit 2 may for example have a length of 10.55 m or 13.6 m, which corresponds to the length of a 40-feet container. The trailing unit 2 may be detachably connected to the towing unit 1, for example the truck 3, via a separate coupling unit 4, for example a converter dolly, as in Figure 1a, providing a compound vehicle with two pivot points: a first pivot point 5 between the towing unit 1 and the coupling unit 4, and a second pivot point 6 between the coupling unit 4 and the trailing unit 2. Figure 1b shows an alternative coupling of the trailing unit 2 to the truck 1 via a dedicated and integrated chassis structure 7 of the truck 1, thus providing only one pivot point 8. The towing unit 1 of a compound vehicle may also comprise a powered tractor unit 9 detachably coupled to a first semi-trailer 10, as in Figures 1c and 1d. In these cases, the compound vehicle comprises a supplementary pivot point 11 between the tractor unit 9 and the first semi-trailer 10. The trailing unit 2 may be detachably coupled to the towing unit 1 in a similar way as in the examples of Figures 1a and 1b, i.e. via a dedicated and integrated chassis structure 7 as in Figure 1b and 1c, or via a separate coupling unit 4, for example a converter dolly, as in Figures 1a and 1d. According to the actual legislation in most European countries, as laid down in the Council Directive 96/53/EC, a maximum length of a compound vehicle or road train comprising a motor vehicle coupled to a trailer, is for example 18,75 m, and a maximum length of an articulated vehicle comprising a motor vehicle coupled to a semi-trailer (a trailer without a front axle) is 16,50 m. These dimensions are also laid down in the Dutch "Regeling Voertuigen" in articles 5.18.11 paragraphs 1 and 2a. In countries allowing LHV's, as is for example the case in the Netherlands since 1 January 2013, the maximum length of an LHV is 25,25 m, according to article 1e of the "Beleidsregel keuring en ontheffingverlening LZV".

However, due to restrictions on manoeuvrability, compound vehicles, especially the truck-trailer combinations of Figures 1a and 1b, cannot always exploit these entire maximal length. Moreover, rearward driving may become complicated, in particular in the combination of Figure 1d including a powered tractor unit 9, a semi-trailer 10, a coupling unit 4, and a trailing unit 2, as the compound vehicle comprises 3 pivot points 5, 6 and 11.

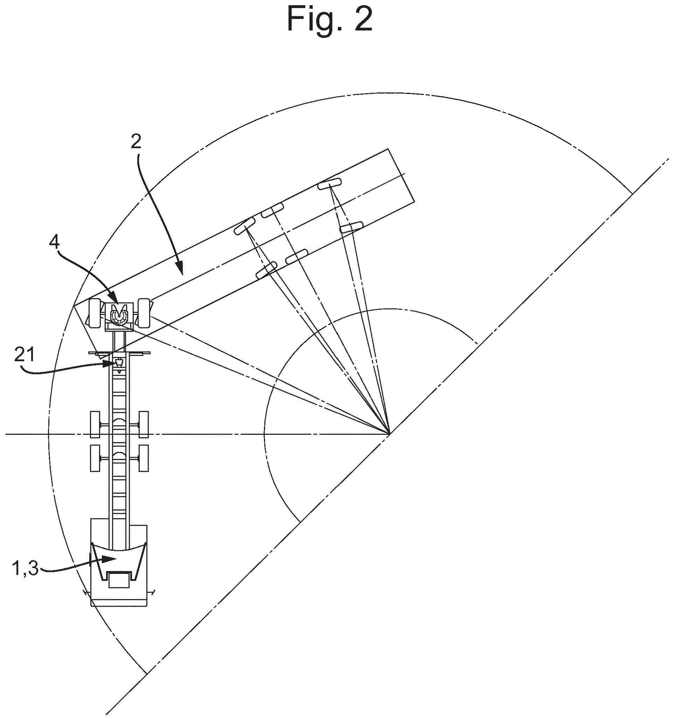

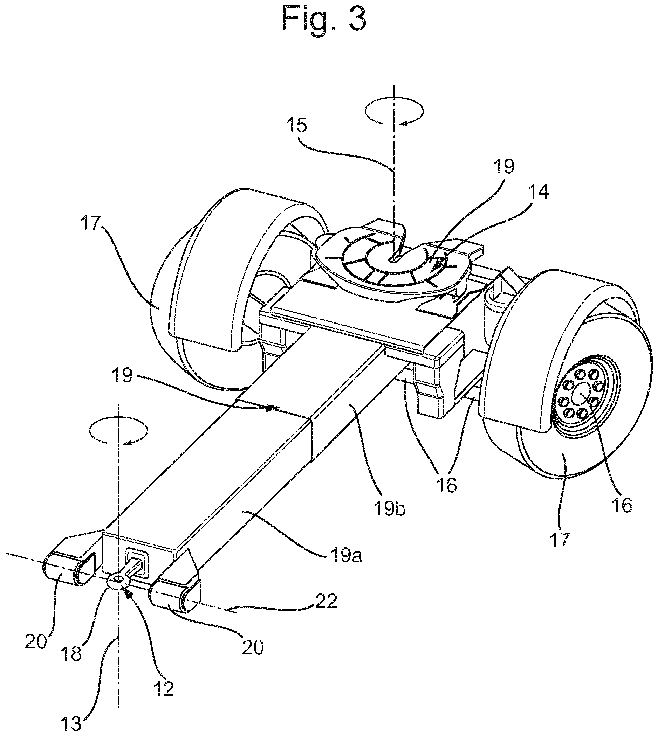

Figure 2 shows a schematic top view on a compound vehicle including the vehicle coupling assembly which will be discussed further in Figures 3-6. The compound vehicle has a composition which is similar to the composition shown in Figure 1a, including a truck 3 as towing unit 1 equipped with a blocking assembly 21 coupled to a coupling unit 4 according to the invention, and a trailing unit 2. In order for such a compound vehicle to be allowed on European roads, the compound vehicle must be able to make a turn of at least 90 degrees within the space between an outer circle of 12.5 m radius and an inner circle of 5.3 m radius. This requirement limits the entire length of the compound vehicle, and at the same time requires a certain amount of space left between the rear of the towing unit 1 and the front of the trailing unit 2, which both cause valuable volume for freight to be lost.

Figure 3 shows a perspective view of a preferred embodiment of a coupling unit 4 according to a first aspect of the invention. A coupling unit 4, for example a converter dolly, comprises a first coupling element 12 arranged to couple said coupling unit 4 to a towing unit 1 of a compound vehicle. The towing unit 1 may be a truck 3 as shown in Figure 1a, or may be a tractor with semi-trailer composition, as shown in Figure 1d. The first coupling element 12 provides a first pivotal axis 13 between said coupling unit 4 and said towing unit 1. In the preferred embodiment of Figure 3, said first coupling element comprises a ring hitch element 18 arranged to receive a pintle hook element of a blocking assembly mountable on said towing unit 1 of said vehicle. Alternatively, said first coupling element 12 may comprise a pintle hook element or any other element of a coupling system known to the person skilled in the art and arranged to detachably connect said coupling unit 4 to said towing unit 1. The coupling unit 4 also comprises a second coupling element 14 arranged to couple said coupling unit 4 to a trailing unit 2 of said compound vehicle providing a second pivotal axis 15 between said coupling unit 4 and said trailing unit 2. Said second coupling element 14 may for example comprise a fifth wheel plate 19, as in Figure 3, arranged to receive a kingpin mounted on said trailing unit 2. However, any other element of a coupling system known to the person skilled in the art and arranged to detachably connect said coupling unit 4 to said trailing unit 2 will do as well.

The coupling unit 4 furthermore includes at least one pair of wheels 17, which may be connected by a single axle 16, or with each wheel being connected to an individual axle. The pair of wheels can be connected by an axis, which can be embodied as a physical axle or as a virtual axis, e.g. when the wheels are independently with respect to each other. The wheels can for example be independently rotatable and/or movable and/or steerable and/or actuatable with respect to each other. Various embodiments are possible, e.g. axle parts may be provided for each wheel, wherein the axle parts may be independently steerable and/or actuatable, or other variants, known to the skilled person, may be envisaged. As can be seen in Figures 1a and 1d, said coupling unit 4 may also be provided with two axles, or even three or more. Each axle 16 may also drive more than one wheel or more than one pair of wheels, for example two wheels on each side of each axle, which is not uncommon in heavier vehicles. In a preferred embodiment, at least one axle 16 of the at least one wheel of the at least one pair of wheels 17 of said coupling unit 4 may be a steerable axle. However, a free axle with follower wheels is also possible. The at least one steerable axle may for example include stub axles, and can be a self steering axle, or a controllably steerable axle. The steering may include crab steering, or more preferably, counter steering. It is preferred to have a pivoting angle of the wheels 17 connected to said at least one steerable axle 16 of said coupling unit 4 higher than 20°, preferably higher than 30°. In case of a controllably steerable axle, the axle may for example be controlled by a truck driver, e.g. from its cabin. A self-steering axle may be controlled by a control and steering mechanism, for example by an electro-hydraulic mechanism. A steering mechanism for steering said at least one steerable axle may for example comprise at least one angle sensing device to measure an angle between said towing unit 1 and said trailing unit 2, and/or between said coupling unit 4 and said trailing unit 2. Such an angle sensing device known per se may be placed near said at least one steerable axle 16, or near said second coupling element 14, or at other suitable places as will be understood by a person skilled in the art. The steering mechanism can also include a plurality of angle sensing devices, for sending steering instructions based on sensing measurements, and/or for checking and/or correcting purposes. Alternatively, or in combination with the above, said steering mechanism may include a force sensing device arranged to measure an intensity or a direction of a force exerted on said at least one steerable axle and/or on said wheels. Steerable axles are commonly known to the person skilled in the art, and are available, among other versions, in a plug-and-play configuration, as for example the VSE City Steering configuration, comprising a steerable stub axle, a steering cylinder, a sensor-provided kingpin and a control and steering box, or as for example the TRIDEC electro-hydraulic EF-S configuration. Such a configuration may for example be built in into a coupling unit 4 according to the invention. Steering of the axle, as well as extension and/or retraction of the first pivoting element and/or the rotation limiting means respectively, may be done by the truck driver from its cabin, or via a mobile device remotely from the cabin. The cabin may thereto be provided with a control panel or user interface on which information regarding angle, speed, force etc. may be displayed. Depending on the detected parameters, the control unit may automatically control the wheels, axle and/or first pivoting element and/or rotation limiting means, or the truck driver may intervene and may provide instructions via the user interface. A mobile device may a mobile phone or table on which the control unit and/or the user interface may be provided, or may, alternatively, be a known remote operating device as known for e.g. loading and/or unloading of a vehicle. Many variants are possible.

In the preferred embodiment of Figure 3, said coupling unit 4 comprises a drawbar 19 protruding from said coupling unit 4 centrally and transversely to said axle 16. Said first coupling element 12 is preferably mounted on an extremity of said protruding drawbar 19. Said drawbar 19 of the embodiment in Figure 3 is a rather large and solid drawbar. Many alternative and conventionally known configurations are possible for such a drawbar: a drawbar may for example include two bars, either in parallel and connected by a transverse bar, or joining each other in a tip forming a triangle with the direction of the axle 16. It is preferred that a length of said protruding drawbar 19 is adjustable. Therefore, the drawbar 19 may for example comprise an inner drawbar 19a which is extensible from an outer drawbar 19b fixedly connected to said coupling unit 4. The drawbar 19 may preferably be continuously adjustable or can be adjustable in steps. The drawbar 19 may also be telescopically extensible in more than two parts. Said first coupling element 12 is preferably mounted on an extremity of said protruding drawbar 19.

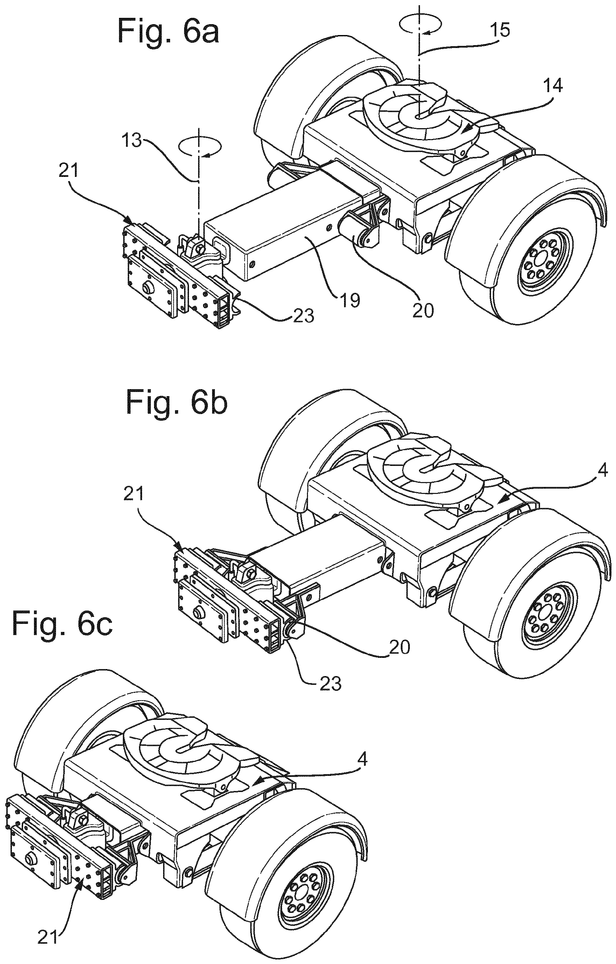

In a novel and inventive way, the coupling unit 4, as shown in Figure 3, comprises rotation limiting means 20 arranged to engage said blocking assembly 21 (see for example Figure 3) to block rotation around said first pivotal axis 13 of said coupling unit 4 with respect to said towing unit 1. The blocking assembly which is engaged by the rotation limiting means 20 may in a simple form for example include a conventional bumper or any other suitable engaging part on the rear side of a towing unit 1. More preferably, the blocking assembly 21 may comprise a dedicated assembly, as will be shown and discussed in Figure 3. In the preferred embodiment of Figure 3, said rotation limiting means 20 are mounted on an extremity of said protruding drawbar 19. Alternatively, rotation limiting means 20 may also be mounted on another suitable part of the coupling unit 4. Or more preferably, said rotation means 20 may also be retractable, for example by mounting them on a retractable element of said protruding drawbar 19 (see Figures 6a-6c). Said rotation limiting means 20 preferably comprise at least two blocking elements, as is shown in Figure 3, of which each is mounted on either side of said first coupling element 12. The at least two blocking elements may preferably be mounted on either side of said first coupling element 12 in a direction in parallel with said at least one axle 16 of said coupling unit 4, as in Figure 3, but it is also possible to mount them on either side of said first coupling element 12 in any other direction, for example in the direction of the pivotal axis 13. The at least one rotation limiting means 20, or preferably two blocking elements, are advantageously mounted in alignment with said first coupling element 12 in a direction in parallel with said at least one axle 16 of said coupling unit 4. The rotation limiting means 20 of the preferred embodiment in Figure 3 have a substantially elongated shape comprising a longitudinal axis 22 substantially in parallel with said at least one axle 16 of said coupling unit 4. In particular, said rotation limiting means 20 may comprise an at least partly substantially cylindrically shaped and substantially convex element, which, in this case, include two rod-like elements or rollers, which may or may not be rotatable around said longitudinal axis 22. Many variants are possible for the rotation limiting means 20, which may for example include a single rod in a transverse direction, or a plurality of blocking elements mounted around said first coupling element 12. The rotation limiting means may have various shapes, and engage said blocking assembly 21 with a substantially flat side, or with a substantially convex side. Alternatively, said rotation limiting means 20 may comprise a substantially concave recess arranged to receive and engage a cooperating substantially convex element on said blocking assembly 21.

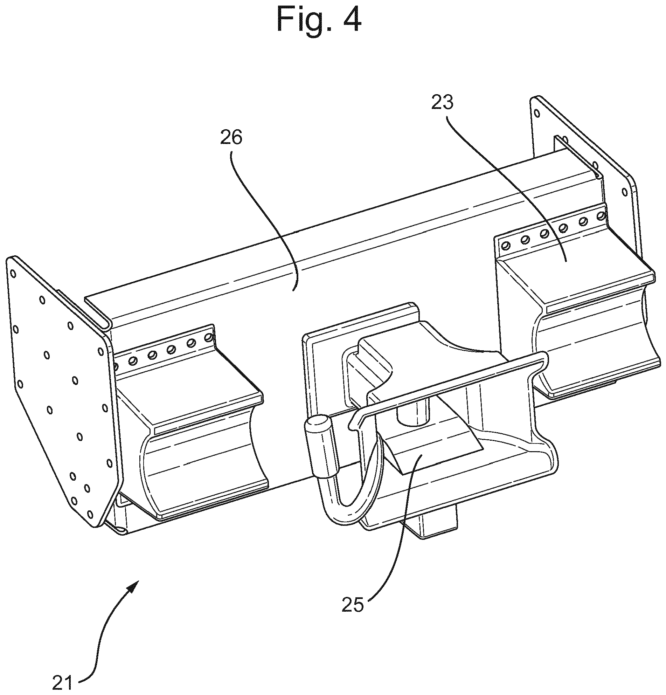

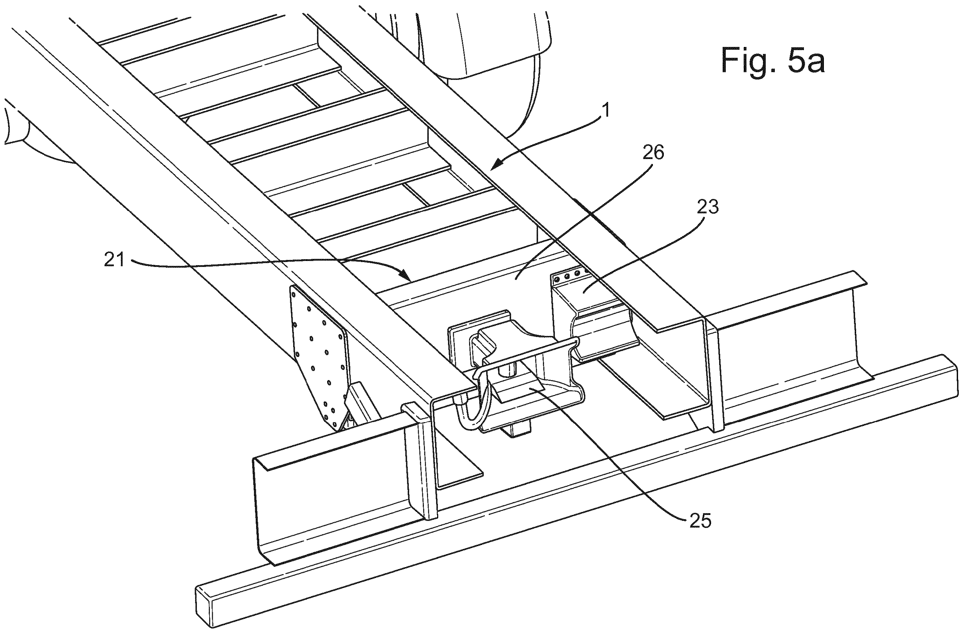

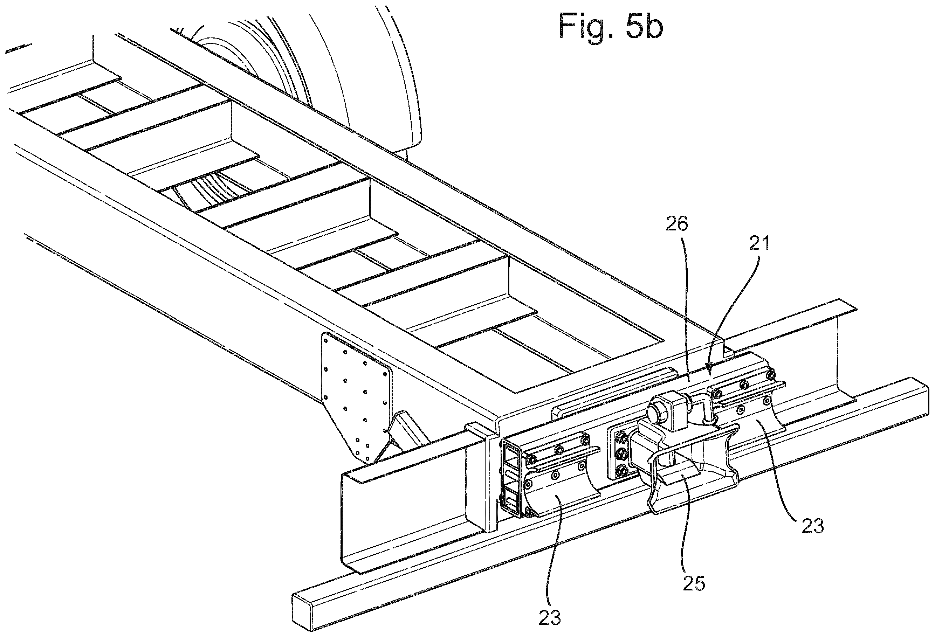

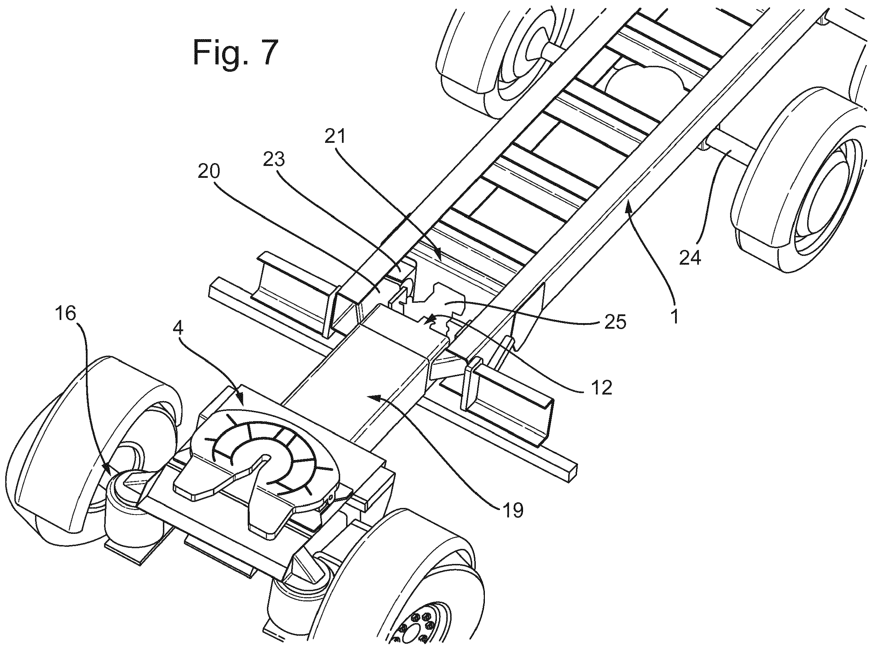

Figure 4 shows a perspective view of a preferred embodiment of a blocking assembly 21 according to a second aspect of the invention. The blocking assembly 21 is suitable for cooperation with a coupling unit 4, for example the coupling unit as shown in Figure 4, which should at least comprise a first coupling element 12 arranged to couple said coupling unit 4 to a towing unit 1 of a compound vehicle, a second coupling element 14 arranged to couple said coupling unit 4 to a trailing unit 2 of said compound vehicle, at least one pair of wheels 17, which may be connected by a single axle 16, or which may each be connected to an individual axle, and the coupling unit 4 further comprising rotation limiting means 20 to block rotation around a first pivotal axis 13 of said coupling unit 4 with respect to said towing unit 1. According to a second aspect of the invention, said blocking assembly 21 comprises at least one rotation limiting engaging member 23 arranged to engage said rotation limiting means 20 of said coupling unit 4 to block rotation around said first pivotal axis 13 of said coupling unit 4 with respect to said towing unit 1. Said rotation limiting engaging member 23 may include a conventionally present element on a rear side of a towing unit 1, for example a bumper, or include a dedicated member. In the preferred embodiment of Figure 4, said rotation limiting engaging member 23 comprises at least two spaced apart rotation limiting engaging members 23, which may preferably be spaced apart in a direction substantially in parallel with an axle 24 (see Figure 7) of the towing unit 1, to which said blocking assembly 21 may be mounted, or in any other direction. Said at least one rotation limiting engaging member 23 advantageously has a substantially elongated shape comprising a longitudinal axis substantially in parallel with said at least one axle 16 of said coupling unit 4 and/or with an axle 24 of the towing unit 1, to which said blocking assembly 21 may be mounted. In particular, said at least one rotation limiting engaging member 23 can comprise a substantially concave recess arranged to receive and guide a cooperating substantially convex element of said rotation limiting means 20 on said coupling unit 4. In the embodiment of Figure 4, the shape of said substantially concave recess substantially matches the shape of the rotation limiting means 20 of the coupling unit 4, which need not necessarily be the case, but which improves smooth cooperation. Said rotation limiting engaging member 23 may even substantially enclose said rotation limiting means 20 of the coupling unit 4. Alternatively, other shapes and forms of rotation limiting engaging members are possible as well, in particular triangles, polygons, rings, and/or clipping configurations, or, in another alternative embodiment, said rotation limiting engaging member 23 might also comprise an at least partly substantially cylindrically shaped and substantially convex element. The preferred embodiment of the blocking assembly 21 in Figure 4 further comprises a coupling member 25 arranged to cooperate with said first coupling element 12 of said coupling unit 4 to detachably couple said coupling unit 4 to said towing unit 1. In this embodiment, the coupling member 25 includes a pintle hook arranged to engage the ring hitch element 18 of the coupling unit 4 of the embodiment shown in Figure 4. As will be clear to the person skilled in the art, any other suitable coupling member may be used. Said at least one rotation limiting engaging member 23 may preferably be mounted in alignment with said coupling member 25 in a direction in parallel with said at least one axle 16 of said coupling unit 4, but a different alignment, or even no alignment, is possible as well. Moreover, in case of at least two spaced apart rotation limiting engaging members 23, said of at least two rotation limiting engaging members 23 may be mounted on either side of said coupling member 25, again preferably in a direction in parallel with said at least one axle 16 of said coupling unit 4. It will be evident to the person skilled in the art that the mounting and spacing of said at least one rotation limiting engaging member 23 and said coupling member 25 will have to be adapted to the corresponding rotation limiting means 20 and the first coupling element 12 of the coupling unit 4. As can be seen in Figure 4, said at least one rotation limiting engaging member 23 is mounted on a chassis 26, which is mountable to said towing unit 1 of said compound vehicle, as can be seen in Figure 5a, showing a perspective view of the blocking assembly 21 of Figure 4 mounted on a towing unit 1 of a compound vehicle. It is preferred that also said coupling member 25 is mounted to said same chassis 26, but that need not be the case. The chassis 26 can for example be mounted on a rear end of said towing unit 1, as in Figure 5b showing another embodiment of a blocking assembly 21 mounted on a towing unit 1. Alternatively, the chassis 26 can also be mounted in a more retracted position on the towing unit 1, as can be seen in Figure 5a.

Figures 6a, 6b and 6c show a preferred embodiment of a vehicle coupling assembly according to a third aspect of the invention comprising a coupling unit 4 coupled to the blocking assembly 21 of Figure 5b. In Figures 6b and c, the rotation limiting means 20 engage the rotation limiting engaging members 23 on the blocking assembly 21, such that rotation around said first pivotal axis 13 of said coupling unit 4 with respect to said towing unit 1 is blocked. The vehicle coupling assembly may be used with the protruding bar 19 in a retracted position, as in Figure 6c, or in a more extended position as in Figure 6b. A compound vehicle equipped with a vehicle coupling assembly as shown in Figures 6b and 6c may legally be considered as an articulated vehicle comprising a truck and a semi-trailer, thus having a maximum length of 16,50 m if the compound vehicle is not a Long and Heavy Vehicle. The rotation limiting means 20 of the coupling unit 4 in the embodiment shown in Figures 6a-6c can however be retracted, as shown in Figure 6a. In this way, the coupling unit 4 can be used as a conventional converter dolly, wherein the first coupling element 12 provides a first pivotal axis 13 between said coupling unit 4 and said towing unit 1, and the second coupling element 14 provides a second pivotal axis 15 between said coupling unit 4 and said trailing unit 2. Even if a compound vehicle provided with a vehicle coupling assembly as shown in Figure 6a may be rather difficult to drive, the configuration has the advantage that it may legally be considered as a truck and trailer combination for which a maximum total length of 18,75 m is applicable.

Figure 7 shows a perspective view of a vehicle coupling assembly comprising the coupling unit of Figure 3 and the blocking assembly mounted on a towing unit as in Figure 5a. The coupling unit 4 is detachably connected to said blocking assembly 21, in particular via the first coupling element 12 cooperating with the coupling member 25 on the blocking assembly 21. Rotation around the first pivotal axis 13 is blocked by the rotation limiting means 20 engaging the rotation limiting engaging members 23. Therefore, an axle 24 of the towing unit 1 is substantially in parallel with said at least one axle 16 of the coupling unit 4 due to the blocking of the rotation of the coupling unit 4 with respect to the towing unit 1. The protruding bar 19 is shown in a non-extended position. A pitching movement of the coupling unit 4 with respect to the towing unit 1 is possible due to the elongated shape, both of the rotation limiting means 20 as of the rotation limiting engaging members 23, comprising a longitudinal axis substantially in parallel with said at least one axle 16 of said coupling unit 4 and/or with an axle 24 of the towing unit 1. This pitching movement may however be limited by the shape of the towing unit's chassis, which may include a groove or channel, in which the protruding bar 19 of the coupling unit 4 may be inserted, as shown in Figure 6.

For the purpose of clarity and a concise description, features are described herein as part of the same or separate embodiments, however, it will be appreciated that the scope of the invention may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art. All variants are understood to be comprised within the scope of the invention defined in the following claims.

## Claims

1. Coupling unit (4) for cooperation with a blocking assembly (21) mountable on a towing unit (1) of a compound vehicle, the coupling unit (4) comprising
- a first coupling element (12) arranged to couple said coupling unit (4) to said towing unit (1) providing a first pivotal axis (13) between said coupling unit (4) and said towing unit (1),
- a second coupling element (14) arranged to couple said coupling unit (4) to a trailing unit (2) of said compound vehicle providing a second pivotal axis (15) between said coupling unit (4) and said trailing unit (2),
- at least one pair of wheels (17),
wherein said coupling unit (4) comprises rotation limiting means (20) arranged to engage said blocking assembly (21) to block rotation around said first pivotal axis (13) of said coupling unit (4) with respect to said towing unit (1), wherein said coupling unit (4) comprises a drawbar (19) protruding from said coupling unit (4) centrally and transversely to an axle or axis connecting the pair of wheels , wherein said rotation limiting means (20) are mounted on an extremity of said protruding drawbar (19).

2. Coupling unit (4) according to claim 1, wherein said rotation limiting means (20) are retractable and/or the first coupling element (12) is extendible.

3. Coupling unit (4) according to any of the preceding claims, wherein said rotation limiting means (20) comprise at least two blocking elements of which each is mounted on either side of said first coupling element (12).

4. Coupling unit (4) according to any of the preceding claims, wherein said rotation limiting means (20) has a substantially elongated shape comprising a longitudinal axis (22) substantially in parallel with an axis connecting said at least one pair of wheels (17) of said coupling unit (4).

5. Coupling unit (4) according to claim 4, wherein said rotation limiting means (20) comprises an at least partly substantially cylindrically shaped and substantially convex element, or wherein said rotation limiting means (20) comprises a substantially concave recess arranged to receive and engage a cooperating substantially convex element on said blocking assembly (21).

6. Coupling unit (4) according to any of the preceding claims, wherein an axle of at least one wheel of said pair of wheels (17) of said coupling unit (4) is a steerable axle.

7. Coupling unit (4) according to claim 6, wherein a pivoting angle of the at least one wheel connected to said at least one steerable axle of said coupling unit (4) is higher than 20°, preferably higher than 30°.

8. Coupling unit (4) according to any of the preceding claims 6-7, wherein a steering mechanism for steering said at least one steerable axle comprises at least one angle sensing device to measure an angle between said towing unit (1) and said trailing unit (2), and/or between said coupling unit (4) and said trailing unit (2).

9. Blocking assembly (21) for cooperation with a coupling unit (4), the coupling unit (4) comprising a first coupling element (12) arranged to couple said coupling unit (4) to a towing unit (1) of a compound vehicle, a second coupling element (14) arranged to couple said coupling unit (4) to a trailing unit (2) of said compound vehicle, at least one axle or axis (16) connecting at least one pair of wheels (17), and the coupling unit (4) further comprising rotation limiting means (20) to block rotation around a first pivotal axis (13) of said coupling unit (4) with respect to said towing unit (1),
wherein said blocking assembly (21) comprises at least one rotation limiting engaging member (23) arranged to engage said rotation limiting means (20) of said coupling unit (4) to block rotation around said first pivotal axis (13) of said coupling unit (4) with respect to said towing unit (1), wherein said at least one rotation limiting engaging member (23) has a substantially elongated shape comprising a longitudinal axis (22) substantially in parallel with said at least one axle (16) of said coupling unit (4).

10. Blocking assembly (21) according to claim 9, comprising at least two spaced apart rotation limiting engaging members (23).

11. Blocking assembly (21) according to any of the preceding claims 9-10, wherein said rotation limiting engaging member (23) comprises an at least partly substantially cylindrically shaped and substantially convex element, or wherein said rotation limiting engaging member (23) comprises a substantially concave recess arranged to receive and guide a cooperating substantially convex element of said rotation limiting means (20) on said coupling unit (4).

12. Blocking assembly (21) according to any of the preceding claims 9-11, wherein said at least one rotation limiting engaging member (23) is mounted on a chassis (26), which is mountable to said towing unit (1) of said compound vehicle.

13. Blocking assembly (21) according to any of the preceding claims 9-12, comprising a coupling member (25) arranged to cooperate with said first coupling element (12) of said coupling unit (4) to couple said coupling unit (4) to said towing unit (1), wherein said coupling member (25) is preferably mounted to said chassis (26).

14. Vehicle coupling assembly for coupling a towing unit (1) of a compound vehicle to a trailing unit (2) of said compound vehicle, comprising a coupling unit (4) according to any of the preceding claims 1-8, and a blocking assembly (21) according to any of the preceding claims 9-13.

15. Compound vehicle comprising a towing unit (1) and a trailing unit (2), wherein the trailing unit (2) is coupled to the towing unit (1) by a vehicle coupling assembly according to claim 14, preferably wherein the compound vehicle is a long and heavy vehicle.

## Patentansprüche

1. Kupplungseinheit (4) für das Zusammenwirken mit einer Blockierungsanordnung (21), die an eine Zugeinheit (1) eines Anhängerfahrzeugs montierbar ist, wobei die Kupplungseinheit (4) Folgendes umfasst:
- ein erstes Kupplungselement (12), das dafür angeordnet ist, die Kupplungseinheit (4) mit der Zugeinheit (1) zu kuppeln, das eine erste Schwenkachse (13) zwischen der Kupplungseinheit (4) und der Zugeinheit (1) bereitstellt,
- ein zweites Kupplungselement (14), das dafür angeordnet ist, die Kupplungseinheit (4) mit einer Anhängereinheit (2) des Anhängerfahrzeugs zu kuppeln, das eine zweite Schwenkachse (15) zwischen der Kupplungseinheit (4) und der Anhängereinheit (2) bereitstellt,
- wenigstens ein Paar Räder (17),
wobei die Kupplungseinheit (4) Drehungsbegrenzungsmittel (20) umfasst, die dafür angeordnet sind, in die Blockierungsanordnung (21) einzugreifen, um eine Drehung der Kupplungseinheit (4) im Verhältnis zur Zugeinheit (1) um die erste Schwenkachse (13) zu blockieren, wobei die Kupplungseinheit (4) eine Zugstange (19) umfasst, die aus der Kupplungseinheit (4) mittig und quer zu einer Achse, die das Paar Räder verbindet, hervorsteht, wobei die Drehungsbegrenzungsmittel (20) an einen Endpunkt der hervorstehenden Zugstange (19) montiert sind.

2. Kupplungseinheit (4) nach Anspruch 1, wobei die Drehungsbegrenzungsmittel (20) einziehbar sind und/oder das erste Kupplungselement (12) ausziehbar ist.

3. Kupplungseinheit (4) nach einem der vorhergehenden Ansprüche, wobei die Drehungsbegrenzungsmittel (20) wenigstens zwei Blockierungselemente umfassen, die jeweils an eine Seite des ersten Kupplungselements (12) montiert sind.

4. Kupplungseinheit (4) nach einem der vorhergehenden Ansprüche, wobei das Drehungsbegrenzungsmittel (20) eine im Wesentlichen langgestreckte Form aufweist, die eine Längsachse (22) umfasst, die im Wesentlichen parallel zu einer Achse liegt, die das wenigstens eine Paar Räder (17) der Kupplungseinheit (4) verbindet.

5. Kupplungseinheit (4) nach Anspruch 4, wobei das Drehungsbegrenzungsmittel (20) ein wenigstens teilweise im Wesentlichen zylinderförmiges und im Wesentlichen konvexes Element umfasst oder wobei das Drehungsbegrenzungsmittel (20) eine im Wesentlichen konkave Vertiefung umfasst, die dafür angeordnet ist, ein zusammenwirkendes, im Wesentlichen konvexes Element an der Blockierungsanordnung (21) aufzunehmen und in Eingriff zu nehmen.

6. Kupplungseinheit (4) nach einem der vorhergehenden Ansprüche, wobei eine Achse von wenigstens einem Rad des Paares Räder (17) der Kupplungseinheit (4) eine lenkbare Achse ist.

7. Kupplungseinheit (4) nach Anspruch 6, wobei ein Schwenkwinkel des wenigstens einen Rades, das mit der wenigstens einen lenkbaren Achse der Kupplungseinheit (4) verbunden ist, größer als 20° ist, vorzugsweise größer als 30°.

8. Kupplungseinheit (4) nach einem der vorhergehenden Ansprüche 6 bis 7, wobei ein Lenkmechanismus zum Lenken der wenigstens einen lenkbaren Achse wenigstens eine Winkelerfassungsvorrichtung umfasst, um einen Winkel zwischen der Zugeinheit (1) und der Anhängereinheit (2) und/oder zwischen der Kupplungseinheit (4) und der Zugeinheit (2) zu messen.

9. Blockierungsanordnung (21) für das Zusammenwirken mit einer Kupplungseinheit (4), wobei die Kupplungseinheit (4) ein erstes Kupplungselement (12) umfasst, das dafür angeordnet ist, die Kupplungseinheit (4) mit einer Zugeinheit (1) eines Anhängerfahrzeugs zu kuppeln, ein zweites Kupplungselement (14), das dafür angeordnet ist, die Kupplungseinheit (4) mit einer Anhängereinheit (2) des Anhängerfahrzeugs zu kuppeln, wenigstens eine Achse (16), die wenigstens ein Paar Räder (17) verbindet, und wobei die Kupplungseinheit (4) ferner Drehungsbegrenzungsmittel (20) umfasst, um eine Drehung der Kupplungseinheit (4) im Verhältnis zur Zugeinheit (1) um eine erste Schwenkachse (13) zu blockieren, wobei die Blockierungsanordnung (21) wenigstens ein Drehungsbegrenzungs-Eingriffselement (23) umfasst, das dafür angeordnet ist, in das Drehungsbegrenzungsmittel (20) der Kupplungseinheit (4) einzugreifen, um eine Drehung der Kupplungseinheit (4) im Verhältnis zur Zugeinheit (1) um die erste Schwenkachse (13) zu blockieren, wobei das wenigstens eine Drehungsbegrenzungs-Eingriffselement (23) eine im Wesentlichen langgestreckte Form aufweist, die eine Längsachse (22) umfasst, die im Wesentlichen parallel zu der wenigstens einen Achse (16) der Kupplungseinheit (4) liegt.

10. Blockierungsanordnung (21) nach Anspruch 9, wenigstens zwei voneinander beabstandete Drehungsbegrenzungs-Eingriffselemente (23) umfassend.

11. Blockierungsanordnung (21) nach einem der vorhergehenden Ansprüche 9 bis 10, wobei das Drehungsbegrenzungs-Eingriffselement (23) eine wenigstens teilweise im Wesentlichen zylinderförmiges und im Wesentlichen konvexes Element umfasst oder wobei das Drehungsbegrenzungs-Eingriffselement (23) eine im Wesentlichen konkave Vertiefung umfasst, die dafür angeordnet ist, ein zusammenwirkendes, im Wesentlichen konvexes Element der Drehungsbegrenzungsmittel (20) an der Kupplungseinheit (4) aufzunehmen und zu führen.

12. Blockierungsanordnung (21) nach einem der vorhergehenden Ansprüche 9 bis 11, wobei das wenigstens eine Drehungsbegrenzungs-Eingriffselement (23) an ein Fahrgestell (26) montiert ist, das an die Zugeinheit (1) des Anhängerfahrzeugs montierbar ist.

13. Blockierungsanordnung (21) nach einem der vorhergehenden Ansprüche 9 bis 12, ein Kupplungselement (25) umfassend, das dafür angeordnet ist, mit dem ersten Kupplungselement (12) der Kupplungseinheit (4) zusammenzuwirken, um die Kupplungseinheit (4) an die Zugeinheit (1) zu kuppeln, wobei das Kupplungselement (25) vorzugsweise an das Fahrgestell (26) montiert ist.

14. Fahrzeugkupplungsanordnung zum Kuppeln einer Zugeinheit (1) eines Anhängerfahrzeugs an eine Anhängereinheit (2) des Anhängerfahrzeugs, umfassend eine Kupplungseinheit (4) nach einem der vorhergehenden Ansprüche 1 bis 8 und eine Blockierungsanordnung (21) nach einem der vorhergehenden Ansprüche 9 bis 13.

15. Anhängerfahrzeug, umfassend eine Zugeinheit (1) und eine Anhängereinheit (2), wobei die Anhängereinheit (2) durch eine Fahrzeugkupplungsanordnung nach Anspruch 14 an die Zugeinheit (1) gekuppelt ist, wobei das Anhängerfahrzeug ein Schwerlastfahrzeug mit Überlänge ist.

## Revendications

1. Unité de couplage (4) pour une coopération avec un ensemble de blocage (21) pouvant être monté sur une unité de remorquage (1) d'un véhicule composé, l'unité de couplage (4) comprenant
- un premier élément de couplage (12) disposé pour coupler ladite unité de couplage (4) à ladite unité de remorquage (1) fournissant un premier axe pivotant (13) entre ladite unité de couplage (4) et ladite unité de remorquage (1),
- un second élément de couplage (14) disposé pour coupler ladite unité de couplage (4) à une unité de remorque (2) dudit véhicule composé fournissant un second axe pivotant (15) entre ladite unité de couplage (4) et ladite unité de remorque (2),
- au moins une paire de roues (17),
dans laquelle ladite unité de couplage (4) comprend des moyens de limitation de rotation (20) disposés pour entrer en prise avec ledit ensemble de blocage (21) afin de bloquer la rotation autour dudit premier axe pivotant (13) de ladite unité de couplage (4) par rapport à ladite unité de remorquage (1), dans laquelle ladite unité de couplage (4) comprend une barre de traction (19) faisant saillie à partir de ladite unité de couplage (4) centralement et transversalement à un essieu ou à un axe reliant la paire de roues, dans laquelle lesdits moyens de limitation de rotation (20) sont montés sur une extrémité de ladite barre de traction (19).

2. Unité de couplage (4) selon la revendication 1, dans laquelle lesdits moyens de limitation de rotation (20) sont rétractables et/ ou le premier élément de couplage (12) est extensible.

3. Unité de couplage (4) selon l'une quelconque des revendications précédentes, dans laquelle lesdits moyens de limitation de rotation (20) comprennent au moins deux éléments de blocage, chacun d'entre eux étant monté sur l'un des deux côtés dudit premier élément de couplage (12).

4. Unité de couplage (4) selon l'une quelconque des revendications précédentes, dans laquelle ledit moyen de limitation de rotation (20) a une forme essentiellement allongée comprenant un axe longitudinal (22) essentiellement en parallèle à un axe reliant ladite au moins une paire de roues (17) de ladite unité de couplage (4).

5. Unité de couplage (4) selon la revendication 4, dans laquelle ledit moyen de limitation de rotation (20) comprend un élément essentiellement convexe et au moins en partie essentiellement de forme cylindrique, ou dans laquelle ledit moyen de limitation de rotation (20) comprend un renfoncement essentiellement concave disposé pour recevoir et entrer en prise avec un élément de coopération essentiellement convexe sur ledit ensemble de blocage (21).

6. Unité de couplage (4) selon l'une quelconque des revendications précédentes, dans laquelle un essieu d'au moins une roue de ladite paire de roues (17) de ladite unité de couplage (4) est un essieu directeur.

7. Unité de couplage (4) selon la revendication 6, dans laquelle un angle de pivot de la au moins une roue reliée au dit au moins un essieu directeur de ladite unité de couplage (4) est supérieur à 20°, de préférence supérieur à 30°.

8. Unité de couplage (4) selon l'une quelconque des revendications précédentes 6 à 7, dans laquelle un mécanisme de direction pour diriger ledit au moins un essieu directeur comprend au moins un dispositif de détection d'angle pour mesurer un angle entre ladite unité de remorquage (1) et ladite unité de remorque (2), et/ ou entre ladite unité de couplage (4) et ladite unité de remorque (2).

9. Ensemble de blocage (21) pour une coopération avec une unité de couplage (4), l'unité de couplage (4) comprenant un premier élément de couplage (12) disposé pour coupler l'unité de couplage (4) à une unité de remorquage (1) d'un véhicule composé, un second élément de couplage (14) disposé pour coupler ladite unité de couplage (4) à une unité de remorque (2) dudit véhicule composé, au moins un essieu ou axe (16) reliant au moins une paire de roues (17) et l'unité de couplage (4) comprenant en outre des moyens de limitation de rotation (20) pour bloquer la rotation autour d'un premier axe pivotant (13) de ladite unité de couplage (4) par rapport à ladite unité de remorquage (1),
dans lequel ledit ensemble de blocage (21) comprend au moins un élément de mise en prise de limitation de rotation (23) disposé pour entrer en prise avec les moyens de limitation de rotation (20) de ladite unité de couplage (4) afin de bloquer la rotation autour dudit premier axe pivotant (13) de ladite unité de couplage (4) par rapport à ladite unité de remorquage (1), dans lequel ledit au moins un élément de mise en prise de limitation de rotation (23) a une forme essentiellement allongée comprenant un axe longitudinal (22) essentiellement en parallèle avec ledit au moins un essieu (16) de ladite unité de couplage (4).

10. Ensemble de blocage (21) selon la revendication 9, comprenant au moins deux éléments de mise en prise de limitation de rotation espacés (23).

11. Ensemble de blocage (21) selon l'une quelconque des revendications précédentes 9 à 10, dans lequel ledit élément de mise en prise de limitation de rotation (23) comprend un élément essentiellement convexe et au moins en partie essentiellement de forme cylindrique, ou dans lequel ledit élément de mise en prise de limitation de rotation (23) comprend un renfoncement essentiellement concave disposé pour recevoir et guider un élément de coopération essentiellement convexe dudit moyen de limitation de rotation (20) sur ladite unité de couplage (4).

12. Ensemble de blocage (21) selon l'une quelconque des revendications précédentes 9 à 11, dans lequel ledit ou lesdits éléments de mise en prise de limitation de rotation (23) sont montés sur un châssis (26) qui peut être monté sur ladite unité de remorquage (1) dudit véhicule composé.

13. Ensemble de blocage (21) selon l'une quelconque des revendications précédentes 9 à 12, comprenant un élément de couplage (25) disposé pour coopérer avec ledit premier élément de couplage (12) de ladite unité de couplage (4) pour coupler ladite unité de couplage (4) à ladite unité de remorquage (1), dans lequel ledit élément de couplage (25) est de préférence monté sur ledit châssis (26).

14. Ensemble de couplage de véhicule pour coupler une unité de remorquage (1) d'un véhicule composé à une unité de remorque (2) dudit véhicule composé, comprenant une unité de couplage (4) selon l'une quelconque des revendications précédentes 1 à 8, et un ensemble de blocage (21) selon l'une quelconque des revendications précédentes 9 à 13.

15. Véhicule composé comprenant une unité de remorquage (1) et une unité de remorque (2), dans lequel l'unité de remorque (2) est couplée à l'unité de remorquage (1) par un ensemble de couplage de véhicule selon la revendication 14, de préférence dans lequel le véhicule composé est un véhicule long et lourd.
